(19) Europäisches Patentamt
European Patent Office
Office européen des brevets

(11) **EP 2 693 232 B1**

(12) **FASCICULE DE BREVET EUROPEEN**

(45) Date de publication et mention de la délivrance du brevet:
**08.02.2017  Bulletin 2017/06**

(51) Int Cl.:
***G01S 19/38*** *(2010.01)*

(21) Numéro de dépôt: **13178296.3**

(22) Date de dépôt: **29.07.2013**

(54) **Procédé de controle de l'intégrité de stations de radio-navigation dans un système d'augmentation par satellite**

Kontrollverfahren der Integrität der Funknavigationsstationen in einem Verstärkungssystem über Satellit

Method for monitoring the integrity of radio-navigation stations in a satellite augmentation system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **03.08.2012  FR 1202181**

(43) Date de publication de la demande:
**05.02.2014  Bulletin 2014/06**

(73) Titulaire: **Thales**
**92400 Courbevoie (FR)**

(72) Inventeurs:
• **Bertin de la Hautière, Gonzagues**
**31400 TOULOUSE (FR)**
• **Dahman, Nidhal**
**31055 TOULOUSE (FR)**

(74) Mandataire: **HAMMES, Pierre et al**
**Marks & Clerk France**
**Immeuble Visium**
**22, avenue Aristide Briand**
**94117 Arcueil Cedex (FR)**

(56) Documents cités:
**WO-A1-2006/134412      US-B1- 7 019 688**

• **XIE G ET AL: "Integrity Design and Updated Test Results for the Stanford LAAS Integrity Monitor Testbed", PROCEEDINGS OF THE ION NATIONAL TECHNICAL MEETING, THE INSTITUTE OF NAVIGATION, US, 11 juin 2001 (2001-06-11), pages 681-693, XP002395458,**
• **LEE J ET AL: "LAAS Sigma-Mean Monitor Analysis and Failure-Test Verification", PROCEEDINGS OF THE ION NATIONAL TECHNICAL MEETING, THE INSTITUTE OF NAVIGATION, US, 11 juin 2001 (2001-06-11), pages 694-704, XP002395457,**
• **ILCEV D ET AL: "European Geostationary Navigation Overlay Service (EGNOS)", IST-AFRICA CONFERENCE PROCEEDINGS, 2011, IEEE, 11 mai 2011 (2011-05-11), pages 1-14, XP032077102, ISBN: 978-1-4577-1077-3**
• **WESTBROOK J ET AL: "EGNOS Central Processing Facility architecture and design", GNSS 2000 CONFERENCE, EDINBURGH, SCOTLAND, UK, MAY 1-4, 2000, , 1 mai 2000 (2000-05-01), pages 1-18, XP002676599, Extrait de l'Internet: URL:http://www.egnos-pro.esa.int/Publicati ons/GNSS%202000/GNSS2000_cpf.pdf**

**EP 2 693 232 B1**

**Description**

L'invention concerne le domaine des systèmes d'augmentation des performances et de la disponibilité de systèmes de navigation par satellite, connus sous l'acronyme anglo-saxon SBAS pour « Satellite Based Augmentation Systems ».

L'invention porte plus précisément sur un procédé de contrôle de l'intégrité de stations de radio-navigation externes pour leur intégration dans un système SBAS.

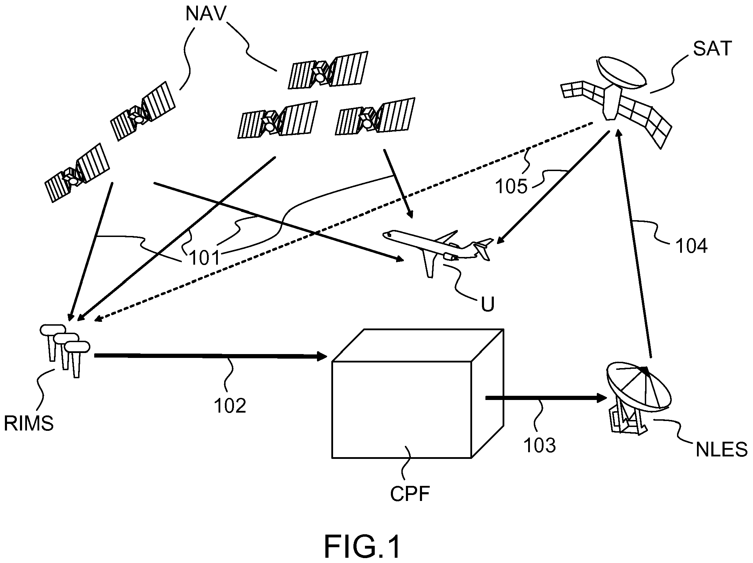

La figure 1 schématise, sur un synoptique, l'architecture globale d'un système SBAS selon l'art antérieur. Un tel système est adapté à produire des données d'augmentation à partir de mesures réalisées sur les signaux de navigation 101 émis par une pluralité de satellites de radionavigation NAV. Les mesures et données provenant des satellites de radionavigation NAV sont collectées par une pluralité de stations d'observations RIMS puis transmises 102, à un rythme donné, vers un ou plusieurs centres de contrôle et traitement CPF. Ces derniers réalisent, à partir des mesures reçues, une estimation des corrections différentielles à appliquer au signal de radionavigation puis élaborent des messages d'augmentation, qui incluent ces corrections et sont ensuite transmis 103 à une station terrestre de navigation NLES. La station NLES reçoit les messages d'augmentation et les transmet 104 à un satellite d'augmentation SAT pour diffusion 105 ensuite aux utilisateurs U et aux stations d'observation RIMS. Les utilisateurs U peuvent être des récepteurs situés au sol ou embarqués dans un porteur, par exemple un aéronef. Les messages d'augmentation sont, à cet effet, intégrés, de façon similaire aux messages de navigation, dans un signal de navigation compatible d'un système de radio-navigation par satellite ou GNSS (Global Navigation Satellite System). Le satellite d'augmentation SAT peut être un satellite géostationnaire ou un satellite à orbite haute HEO ou encore un satellite à orbite géostationnaire inclinée de type IGSO (Inclined Geosynchronous Satellite Orbit). Il s'agit par exemple d'un satellite du système européen EGNOS (European Geostationary Navigation Overlay Service). La station NLES effectue un contrôle d'intégrité des messages reçus, transmis par les centres de contrôle et traitement CPF, avec les messages diffusés par le satellite d'augmentation SAT sur la liaison descendante.

Dans un système d'augmentation par satellite, les stations d'observations RIMS, chargées de réaliser des mesures sur les signaux de radio-navigation reçus, sont le plus souvent en nombre limité. Par exemple, le système SBAS européen EGNOS ne comporte que trente-sept stations d'observations dans sa version actuellement opérationnelle et deux autres stations sont en cours de déploiement. De même, le système SBAS américain WAAS comporte trente-huit stations d'observation Un nombre limité de stations d'observations implique une disponibilité limitée pour le service associé au système SBAS, en particulier dans les zones géographiques où le service doit être assuré mais qui ne comportent que peu de stations. En outre, le nombre de stations d'observations impacte directement les performances du système en termes de précision des modélisations réalisées à partir des mesures collectées. En particulier les modélisations des orbites des satellites ainsi que l'ionosphère fournies par un système SBAS seront d'autant plus précises que le nombre de stations est élevé.

Pour augmenter le nombre de stations d'observation disponibles, l'idée à la base de l'invention consiste à utiliser, à la place ou en complément des stations d'observations RIMS dédiées au système SBAS, des stations externes dont la fonction première n'est pas la réalisation de mesures à destination d'un centre de traitement CPF d'un système SBAS. En particulier, de telles stations externes peuvent être fournies par des organismes qui gèrent des réseaux collaboratifs de stations de radio-navigation. Par exemple, les organismes IGS (International GNSS Service), EUREF (European Reference) IGN (Institut géographique national français) proposent respectovement les réseaux collaboratifs IGS global network, EPN (EUREF Permanent Network) et RGP (Réseau Géodésique Permanent).

De tels réseaux collaboratifs comportent un grand nombre de stations GNSS, par exemple le réseau RGP comporte 300 stations, cependant les mesures fournies par ces stations sont non garanties. Si une station présente un problème dans son fonctionnement et transmet une mesure aberrante, cela peut perturber le fonctionnement global du système.

Pour être compatible des exigences d'intégrité requises par un système SBAS, les données fournies par les stations externes audit système, agissant en lieu et place des stations d'observation RIMS, doivent être contrôlées afin de respecter le niveau d'intégrité spécifié.

Les solutions connues permettant d'effectuer un contrôle d'intégrité des mesures reçues par le centre de traitement CPF sont de deux types.

Une première solution consiste à utiliser une information sur la qualité du signal de radio-navigation reçu par les stations d'observation RIMS pour filtrer les mesures aberrantes. Une telle information de qualité est calculée par les stations d'observation RIMS internes d'un système SBAS standard et transmise au centre de traitement CPF. Cependant, des stations externes au système SBAS n'intègrent pas un tel calcul et sans une information de qualité, le procédé de filtrage mis en oeuvre par le centre de traitement CPF n'est pas possible.

Une seconde solution consiste à utiliser une fonction de contrôle en parallèle de la fonction chargée de détecter les défauts d'intégrité comme cela est classiquement fait par exemple dans un centre de contrôle et de traitement du système d'augmentation européen EGNOS. Une telle solution permet l'utilisation en confiance d'un message de navigation SBAS mais se traduit par une réduction de la disponibilité car elle implique le filtrage de toutes les mesures issues d'un même satellite ou en provenance d'une zone donnée de l'ionosphère.

On connait par ailleurs une autre solution décrite dans le brevet américain US7019688.

L'invention apporte une solution au problème de contrôle d'intégrité des mesures fournies par une station de radio-navigation externe à un système SBAS.

Elle consiste à intégrer, en amont du centre de contrôle et de traitement CPF, un module de vérification adapté à valider l'intégrité des stations externes et à exclure les stations pour lesquelles un défaut d'intégrité est détecté.

L'invention permet d'augmenter la disponibilité du service SBAS par rapport aux solutions connues car elle réalise un filtrage par exclusion des stations d'observations au cas par cas et non un filtrage de l'ensemble des mesures issues de signaux provenant d'un même satellite et d'une même zone de l'ionosphère.

Ainsi, l'invention a pour objet un procédé de contrôle de l'intégrité de stations d'observation de signaux de radio-navigation dans un système d'augmentation par satellite SBAS comprenant au moins les étapes suivantes :

- Définir au moins une zone géographique comprenant une pluralité de stations d'observations,
- Calculer, pour chaque station d'observation de ladite zone et pour chaque axe à vue entre ladite station et un satellite, l'écart entre la pseudo-distance théorique D et la pseudo-distance mesurée D',
- Calculer la moyenne m desdits écarts D-D' sur ladite zone pour l'ensemble des satellites en visibilité de ladite zone,
- Valider l'intégrité d'au moins une station d'observation de ladite zone si l'écart entre la pseudo-distance théorique D et la pseudo-distance mesurée D', pour ladite station et pour au moins un axe à vue entre ladite station et un satellite, est inférieur ou égal à ladite moyenne que multiplie un seuil d'exclusion prédéterminé et exclure cette station d'observation dans le cas contraire.

Dans une autre variante de réalisation de l'invention, on valide (602) l'intégrité des stations d'observation de ladite zone si tous les écarts entre pseudo-distance théorique D et pseudo-distance mesurée D' pour tous les axes à vue sont inférieurs ou égaux à ladite moyenne que multiplie un seuil d'exclusion prédéterminé.

Selon un aspect particulier de l'invention, la pseudo-distance théorique D est calculée à partir de la connaissance des positions des satellites et des stations d'observations et la pseudo-distance mesurée D' est calculée par les stations d'observations à partir des signaux de radio-navigation reçus.

Ladite zone peut être de taille fixe ou peut être un cercle de rayon variable centré sur une station d'observation donnée, dite station de référence. Le rayon de ladite zone peut être configuré pour que chaque zone comprenne le même nombre N de stations.

Dans une variante de réalisation de l'invention, au sein d'une zone, on valide uniquement l'intégrité de la station de référence.

Le seuil d'exclusion peut être fixe ou fonction du nombre maximum de stations d'observation par zone à exclure. Il peut également être configuré de sorte à minimiser la probabilité de fausse alarme et la probabilité de non détection sur le nombre de stations d'observation exclues.

Selon un aspect particulier de l'invention, lesdites stations d'observation font partie d'un réseau de stations collaboratif.

L'invention a également pour objet un centre de contrôle et de traitement pour système d'augmentation par satellite SBAS comportant des moyens de contrôle de l'intégrité de stations d'observation de signaux de radio-navigation, lesdits moyens étant adaptés à mettre en oeuvre le procédé selon l'invention.

L'invention a également pour objet un système d'augmentation par satellite SBAS comportant une pluralité de stations d'observations dont l'intégrité n'est pas garantie et au moins un centre de contrôle et de traitement selon l'invention.

D'autres caractéristiques et avantages de la présente invention apparaîtront mieux à la lecture de la description qui suit en relation aux dessins annexés qui représentent :

- La figure 1, un synoptique d'un système d'augmentation SBAS selon l'art antérieur,
- La figure 2, un synoptique d'un système d'augmentation SBAS adapté selon l'invention,
- La figure 3, un synoptique d'une variante de réalisation du système d'augmentation SBAS selon l'invention décrit à la figure 2,
- La figure 4, un schéma fonctionnel de l'architecture d'un centre de contrôle et de traitement d'un système SBAS selon l'art antérieur,
- La figure 5, un schéma fonctionnel de l'architecture d'un centre de contrôle et de traitement d'un système SBAS adapté selon l'invention,
- La figure 6, un schéma illustrant la mise en oeuvre du procédé de contrôle de l'intégrité de stations de mesures d'un système SBAS selon l'invention,
- La figure 7, un exemple de regroupement par zones des stations de mesures utilisées par un système SBAS selon une première variante de l'invention,

- La figure 8, un exemple illustrant le mécanisme d'exclusions de stations de mesures non fiables selon la première variante de l'invention,
- La figure 9, un premier exemple de regroupement par zones des stations de mesures utilisées par un système SBAS selon une seconde variante de l'invention,
- La figure 10, un deuxième exemple de regroupement par zones des stations de mesures utilisées par un système SBAS selon la seconde variante de l'invention,
- La figure 11, un exemple illustrant le mécanisme d'exclusions de stations de mesures non fiables selon la seconde variante de l'invention,

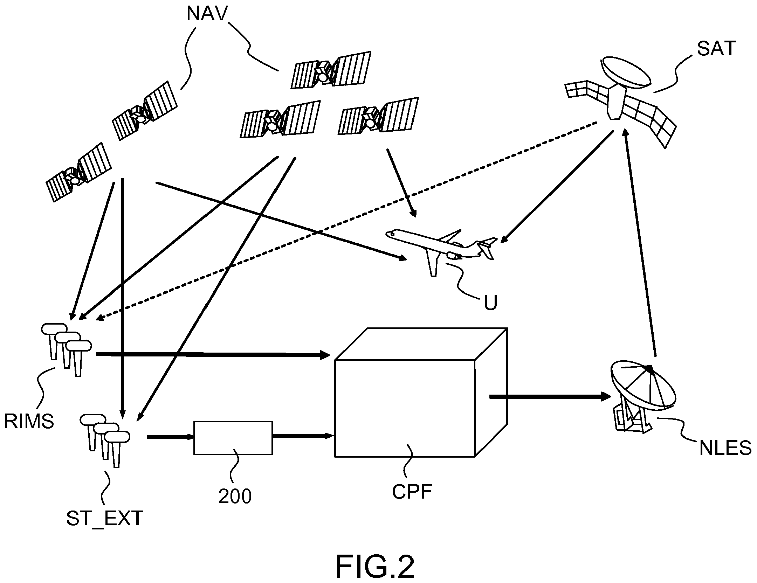

La figure 2 représente un schéma d'un système d'augmentation SBAS adapté selon l'invention. Les éléments communs avec le système SBAS selon l'art antérieur représenté à la figure 1 sont identifiés par les mêmes références. En remplacement ou en complément des stations d'observations RIMS adaptées au système SBAS, une pluralité de stations ST_EXT externes au système SBAS, dont les positions sont connues, sont intégrées au système SBAS selon l'invention. Par stations externes, on entend des récepteurs de signaux de radio-navigation qui ne sont pas dédiés à une utilisation dans le cadre d'un système d'augmentation SBAS. Le fonctionnement de tels récepteurs n'est donc pas garanti et leur niveau de fiabilité est moindre que celui des stations d'observations RIMS dédiées à une utilisation au coeur d'un système d'augmentation SBAS. Les stations externes ST_EXT réceptionnent les signaux de radio-navigation émis par un ou plusieurs satellites de radio-navigation NAV et transmettent les mesures associées à ces signaux à un centre de traitement CPF. La transmission des mesures peut se faire via le réseau Internet car les réseaux collaboratifs (IGS,EUREF,RGP) offrent ce type de service. Un module de vérification 200 des signaux transmis par les stations externes ST_EXT est inséré en amont des traitements réalisés dans le centre de traitement CPF. Ce module est avantageusement intégré au centre de traitement CPF. Il réalise un contrôle d'intégrité permettant de construire une confiance collective envers les stations externes ST_EXT et d'exclure celles qui sont jugées non fiables selon un critère défini par la suite.

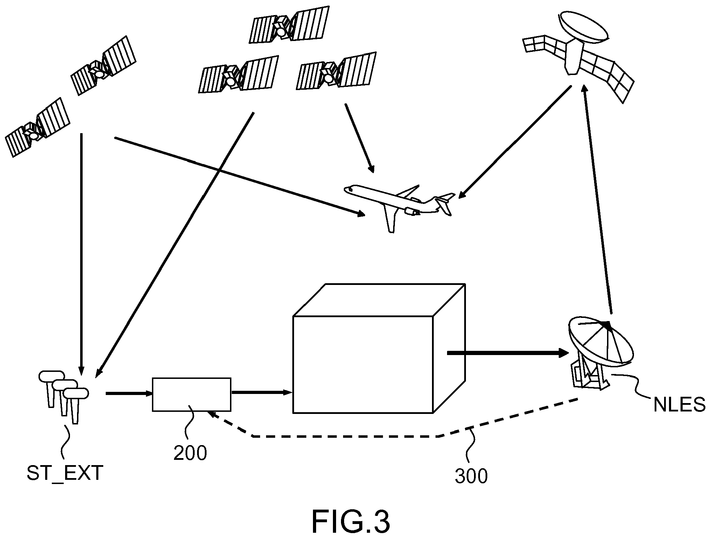

La figure 3 représente une variante de réalisation du système SBAS selon l'invention dans lequel seules des stations externes ST_EXT sont utilisées à l'exclusion des stations d'observation RIMS. A l'inverse des stations d'observation RIMS, les stations ST_EXT externes au système SBAS ne sont pas adaptées à un tel système et ne peuvent donc pas recevoir les messages d'augmentation diffusés par le satellite d'augmentation SAT. Dans ce cas, les messages d'augmentation peuvent être directement transmis par la station terrestre de navigation NLES vers le centre de traitement CPF via un canal de retour 300.

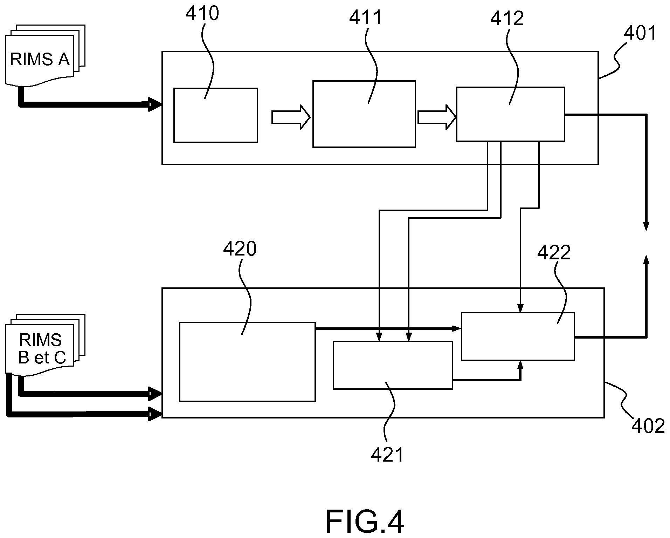

La figure 4 représente un schéma fonctionnel de l'architecture d'un centre de contrôle et de traitement CPF d'un système SBAS selon l'art antérieur.

Cette architecture est principalement composée d'un premier module 401 de traitement ou « Processing Set » en anglais et d'un second module 402 de contrôle ou « Check Set » en anglais.

Le premier module 401 de traitement reçoit des mesures en provenances de stations d'observations RIMS dites de type A. Le second module 402 de traitement reçoit des mesures en provenance de stations d'observations RIMS dites de type B. Les stations d'observation RIMS de types A et B transmettent les mêmes informations vers le centre de contrôle et de traitement CPF, à savoir une mesure de la pseudo-distance entre la station et chaque satellite en vue de la station, le message de navigation et des mesures de Doppler, rapport signal à bruit et cohérence de code porteuse. En outre chaque station transmet également une information sur la qualité des signaux qu'elle reçoit.

Le module 401 de traitement comporte une première fonction 410 de filtrage des mesures transmises par les stations RIMS A sur la base de l'information de qualité du signal. Les mesures considérées non fiables sont éliminées de la suite des calculs. Le module 401 de traitement comporte en outre une fonction 411 de calcul de corrections et d'information sur l'intégrité des mesures et une fonction 412 d'élaboration du message d'augmentation.

Le module 402 de contrôle comporte une première fonction 420 de filtrage des mesures transmises par les stations RIMS B, qui fonctionne de façon similaire à la fonction 410 de filtrage du module 401 de traitement. Le module 402 de contrôle comporte en outre une première fonction 421 de contrôle de la fiabilité du message généré par le module 401 de traitement et une seconde fonction 422 de contrôle qui vérifie la bonne incorporation, dans le message d'augmentation, des informations produites par la première fonction 421 de contrôle. La première fonction 421 de contrôle effectue une comparaison entre les informations de positionnement établies dans le message d'augmentation généré par le module 401 de traitement et les informations de positionnement transmises par les stations RIMS B. Si l'écart entre ces deux informations de positionnement est trop important, la fonction 421 de contrôle communique avec la fonction 412 d'élaboration du message d'augmentation pour l'informer de l'invalidité des données concernées. En pratique lorsqu'une anomalie est détectée par la fonction 421 de contrôle, cela aboutit à l'invalidation de toutes les mesures fournies par un même satellite ou issues de signaux en provenance d'une zone donnée de l'ionosphère. Le contrôle réalisé par le module 402 entraine donc une réduction de la disponibilité pour le système SBAS global puisque certains satellites ou certaines zones de l'ionosphère seront rendus inexploitables.

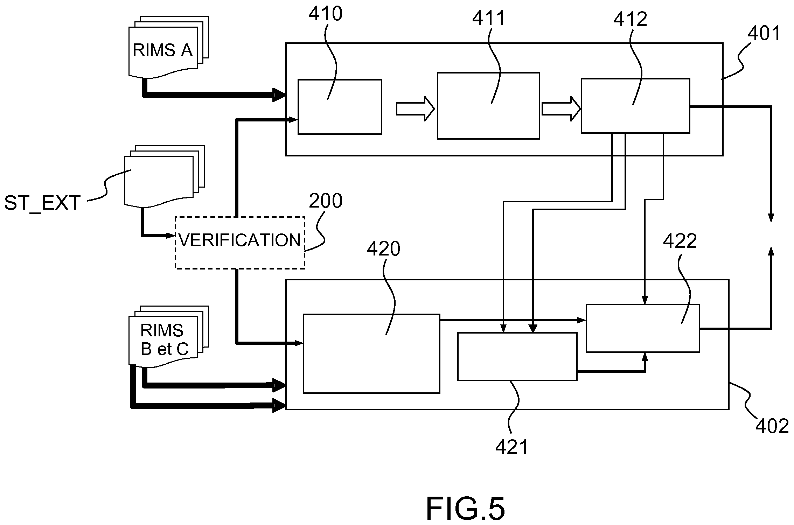

La figure 5 représente le centre de contrôle et de traitement CPF de la figure 4 dans lequel est inséré, en amont des traitements habituels, un module de vérification 200 permettant de contrôler l'intégrité des mesures transmises par les stations ST_EXT externes au système.

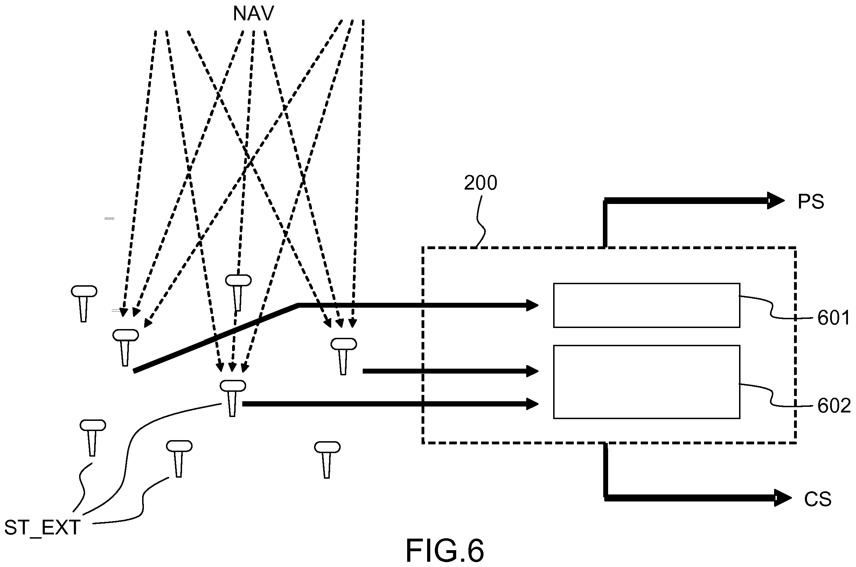

La figure 6 illustre le procédé mis en oeuvre par le module de vérification 200.

Pour chaque ligne de vue entre une station ST_EXT et un satellite NAV, une pseudo-distance théorique D et une pseudo-distance mesurée D' sont calculées. La pseudo-distance théorique D est égale à la distance géométrique entre la position du satellite NAV et la position réelle de la station ST_EXT. La position du satellite est fournie dans le message de navigation transmis, selon le mode de réalisation de l'invention par les stations d'observation RIMS ou par la voie de retour de la station terrestre de navigation NLES. Les positions réelles des stations ST_EXT sont connues et diffusées par l'organisme coopératif, par exemple l'organisme RGP, qui gère le réseau de stations. La pseudo-distance mesurée D' est celle qui est transmise par la station externe ST_EXT vers le centre de traitement CPF.

L'écart D'-D entre les pseudo-distances théorique et mesurée est calculé, il correspond à l'erreur de mesure sur une ligne de vue entre une station et un satellite. Cette erreur de mesure comporte différentes contributions tel qu'illustré par l'équation suivante :

$$D_m = D + \delta d + c(h_e - h_r) + e_T + e_i + e_m + e_b$$

$D_m$ est la distance mesurée,
$D$ est la distance réelle,
$\delta d$ est l'erreur sur l'éphéméride,
$c(h_e - h_r)$ est l'erreur d'horloge satellite et récepteur,
$e_T$ est l'erreur de propagation troposphérique,
$e_i$ est l'erreur de propagation ionosphérique,
$e_m$ est l'erreur liée aux multi-trajets,
$e_b$ est l'erreur liée au bruit de mesure.

Le contrôle d'intégrité selon l'invention permet d'isoler les erreurs propres à la station et à son environnement proche, c'est-à-dire les erreurs sur l'horloge du récepteur, liées à la propagation troposphérique et aux multi-trajets. En effet, les erreurs liées aux satellites ou à la propagation ionosphérique sont communes pour tous les récepteurs d'une même zone géographique. A l'inverse, les erreurs liées aux récepteurs ou à leur environnement proche n'impactent que certains récepteurs au sein d'une zone donnée.

Dans une première étape 601, le module de vérification 200 selon l'invention calcule la moyenne m des écarts D'-D entre pseudo-distances théorique et mesurée pour un nombre N de stations externes situées dans une zone géographique Z et pour un nombre Si de satellites en visibilité.

Cette moyenne est calculée à l'aide de la relation suivante :

$$m = \frac{1}{N}\sum_{i=1}^{N}\frac{1}{s_i}\sum_{j=1}^{S_i}(D_{i,j} - D'_{i,j}), \qquad (1)$$

où $D_{i,j}$ est la pseudo-distance théorique entre une station i et un satellite j et $D'_{i,j}$ est la pseudo-distance mesurée.

Dans une seconde étape 602, les stations identifiées comme non fiables sont exclues. Autrement dit, les stations pour lesquelles l'écart $D_{i,j} - D'_{i,j}$ est très supérieur à la moyenne m sont exclues. Plus précisément, un test de comparaison est effectué entre le ratio de l'écart $D_{i,j} - D'_{i,j}$ et de la moyenne m avec un seuil d'exclusion prédéterminé.

Le calcul de moyenne ci-dessus peut être réalisé pour l'ensemble des axes à vue des stations d'une même zone Z autrement dit pour l'ensemble des satellites en visibilité de cette zone. Dans ce cas, les pseudo-distances mesurées $D'_{i,j}$ peuvent être pré-corrigées des erreurs liées au satellite ou à la propagation des signaux dans l'ionosphère par application de méthodes connues et dans le but d'éliminer du critère d'exclusion les défauts liés à l'environnement lointain des stations.

En particulier il est possible de pré-corriger les erreurs d'éphémérides en utilisant les corrections fournies dans le message d'augmentation SBAS, mais également les erreurs ionosphériques en utilisant une modélisation de l'ionosphère ou encore les erreurs d'horloges satellites.

Dans le cas où les pseudo-distances mesurées ne sont pas pré-corrigées pour éliminer l'influence des satellites et plus généralement de l'environnement lointain d'une station, le calcul de moyenne m peut également être réalisé pour chaque axe à vue séparément. La relation (1) se réduit alors à la relation suivante :

$$m_j = \frac{1}{N} \sum_{i=1}^{N} (D_i - D'_i)$$

Le test de comparaison de l'étape 602 est alors réalisé pour chaque axe à vue séparément. Une station pour laquelle l'écart $D_i$ - $D'_i$ est très supérieur à la moyenne $m_j$ pour au moins un satellite j est exclue.

Le choix du nombre N de stations à prendre en compte pour le calcul de moyenne et/ou le choix du maillage géographique permettant de définir les zones dans lesquelles sont situées ces stations peut être défini selon plusieurs variantes. Ce choix résulte de plusieurs compromis. Tout d'abord, plus le nombre N de stations prises en compte pour le calcul de la moyenne m est important plus le calcul est statistiquement fiable. D'autre part, on considère que les stations situées dans une même zone géographique sont en visibilité des mêmes satellites et sont impactées par des sources d'erreur extérieures communes. C'est pour cette raison que l'écart entre pseudo-distance théorique et mesurée présente une valeur identique ou proche pour les stations situées dans un environnement géographique proche. Le choix du maillage géographique doit prendre en compte les deux contraintes précitées, un nombre de stations par zone suffisant pour obtenir un résultat statistique cohérent mais une taille de zone suffisamment faible pour que l'ensemble des stations de cette zone soient impactées par des sources d'erreur extérieures communes. Par source d'erreur extérieure, on entend une source d'erreur liée à un satellite ou à un environnement éloigné d'une station. Il s'agit principalement des erreurs de dysfonctionnement de la station elle-même, par exemple les erreurs d'horloge, mais également celles liées à l'environnement proche c'est-à-dire les erreurs de propagation liées aux multi-trajets ou à la troposphère.

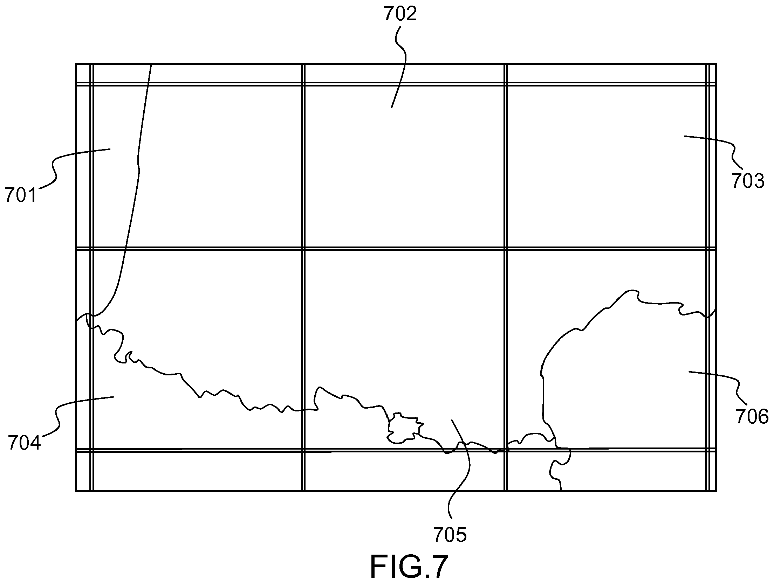

Selon une première variante de l'invention illustrée à la figure 7, la zone géographique contenant l'ensemble des stations externes ST_EXT à exploiter peut être découpée en sous-zones 701,702,703,704,705,706 de formes et tailles identiques, par exemple rectangulaire. Le nombre de stations par sous-zone est alors variable.

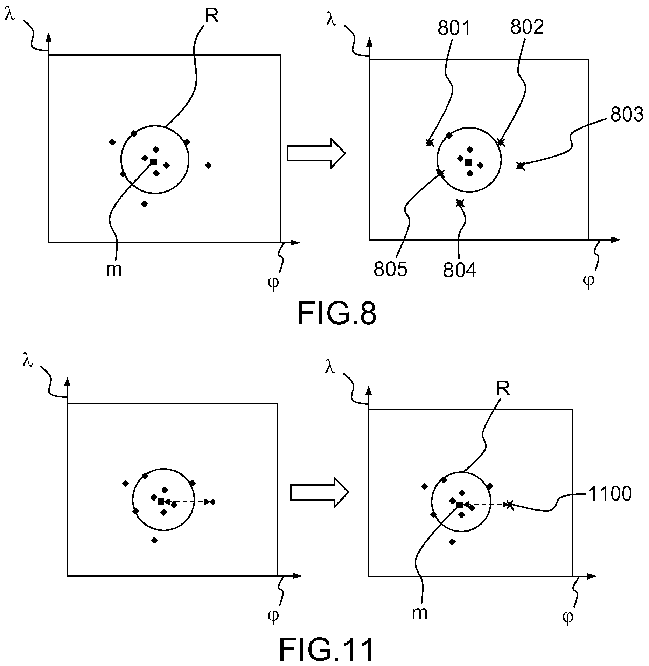

La figure 8 schématise le principe d'exclusion des stations externes dont la fiabilité n'est pas garantie pour la définition de sous-zones selon la première variante de l'invention.

On représente sur un diagramme en deux dimensions (latitude $\varphi$, longitude $\lambda$), les mesures d'écarts D-D' obtenues pour chaque station. La moyenne m calculée est également positionnée ainsi que le rayon R autour de cette moyenne correspondant au seuil d'exclusion prédéfini. Les stations 801,802,803,804,805 dont les mesures d'écarts D-D' sont supérieures au rayon R sont exclues.

Le principe décrit peut s'appliquer pour l'ensemble des lignes de vue entre une station et plusieurs satellites ou pour un sous-ensemble de ces lignes de vue.

Le seuil d'exclusion peut être fixe ou fonction du nombre de valeurs que l'on souhaite exclure. Il peut être réglé de façon empirique à l'aide de scénarios de simulation. Par exemple, la méthode de simulation permettant de configurer ce seuil peut consister en un réglage initial du seuil à une valeur élevée pour limiter le nombre de stations exclues. Le seuil peut être initialement réglé de sorte à n'exclure que 10% des stations d'une zone au maximum. Puis, des scénarios de simulation sont mis en oeuvre en simulant l'impact de différents types d'erreurs sur les stations externes. Le seuil d'exclusion est ensuite réglé de sorte à minimiser à la fois le nombre d'exclusions abusives, autrement dit la probabilité de fausse alarme, et le nombre d'exclusions manquées, autrement dit la probabilité de non détection.

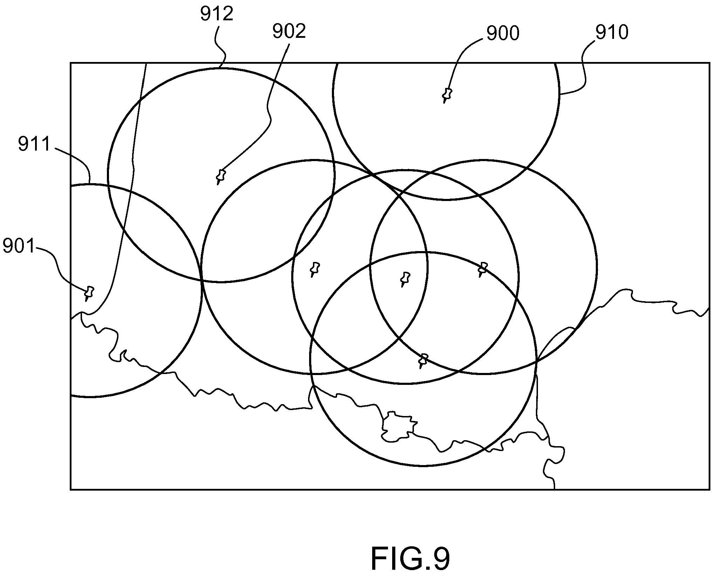

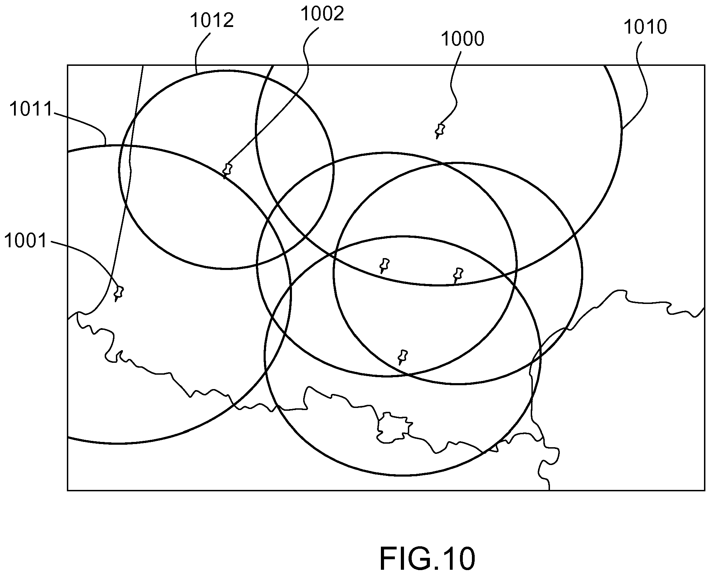

Les figures 9 et 10 illustrent deux exemples de définition de sous-zones convenant à la mise en oeuvre d'une seconde variante de l'invention.

Selon l'exemple illustré à la figure 9, une sous-zone peut être définie à partir d'une station centrale 900,901,902 de référence et d'un cercle 910,911,912 de rayon prédéterminé fixe pour toutes les zones. Les sous-zones construites sont plus adaptées au maillage géographique des stations mais le nombre N de stations par sous-zone est toujours variable.

Selon l'exemple illustré à la figure 10, le rayon des cercles 1010,1011,1012 définissant une sous-zone autour d'une station centrale 1000,1001,1002 de référence peut être variable pour prendre en compte les différences de densité de répartition géographique des stations. Le rayon des cercles est déterminé de sorte que chaque sous-zone inclue un même nombre N de stations. Sur l'exemple de la figure 10, chaque zone contient un nombre N égal à 10 stations.

La figure 11 schématise le principe d'exclusion des stations externes dont la fiabilité n'est pas garantie pour la définition de sous-zones selon la seconde variante de l'invention.

Pour chaque sous-zone associée à chaque station de référence 1100 telle que définie selon l'un des exemples au choix des figures 9 ou 10, la moyenne m des écarts D-D' est calculée ainsi que le rayon R autour de cette moyenne correspondant au seuil d'exclusion prédéfini. Si la station de référence 1100 est située en dehors du cercle de rayon R, alors cette station et seulement celle-ci est exclue.

Cette seconde variante de l'invention permet d'affiner la précision des calculs réalisés car elle comporte potentiellement autant de sous-zones que de stations externes. La première variante de l'invention présente quant à elle l'avantage de limiter le nombre de sous-zones et donc le nombre de calculs à effectuer.

**Revendications**

1. Procédé de contrôle de l'intégrité de stations (ST_EXT) d'observation de signaux de radio-navigation dans un système d'augmentation par satellite SBAS comprenant au moins les étapes suivantes :

   - Définir au moins une zone (701,910,1010) géographique comprenant une pluralité de stations d'observations (ST_EXT),
   - Calculer, pour chaque station d'observation (ST_EXT) de ladite zone et pour chaque axe à vue entre ladite station et un satellite, l'écart entre la pseudo-distance théorique D et la pseudo-distance mesurée D',

   ledit procédé étant **caractérisé en ce qu'**il comprend en outre les étapes de :

   - Calculer (601) la moyenne m desdits écarts D-D' sur ladite zone pour l'ensemble des satellites en visibilité de ladite zone,
   - Valider l'intégrité (602) d'au moins une station d'observation de ladite zone si l'écart entre la pseudo-distance théorique D et la pseudo-distance mesurée D', pour ladite station et pour au moins un axe à vue entre ladite station et un satellite, est inférieur ou égal à ladite moyenne que multiplie un seuil d'exclusion prédéterminé et exclure cette station d'observation dans le cas contraire.

2. Procédé de contrôle de l'intégrité de stations (ST_EXT) d'observation de signaux de radio-navigation selon la revendication 1 dans lequel on valide (602) l'intégrité des stations d'observation de ladite zone si tous les écarts entre pseudo-distance théorique D et pseudo-distance mesurée D' pour tous les axes à vue sont inférieurs ou égaux à ladite moyenne que multiplie un seuil d'exclusion prédéterminé.

3. Procédé de contrôle de l'intégrité de stations (ST_EXT) d'observation de signaux de radio-navigation selon l'une des revendications précédentes dans lequel la pseudo-distance théorique D est calculée à partir de la connaissance des positions des satellites et des stations d'observations (ST_EXT) et la pseudo-distance mesurée D' est calculée par les stations d'observations (ST_EXT) à partir des signaux de radio-navigation reçus.

4. Procédé de contrôle de l'intégrité de stations (ST_EXT) d'observation de signaux de radio-navigation selon l'une des revendications 1 à 3 dans lequel ladite zone (701) est de taille fixe.

5. Procédé de contrôle de l'intégrité de stations (ST_EXT) d'observation de signaux de radio-navigation selon l'une des revendications 1 à 3 dans lequel ladite zone (910) est un cercle de rayon variable centré sur une station d'observation donnée, dite station de référence.

6. Procédé de contrôle de l'intégrité de stations (ST_EXT) d'observation de signaux de radio-navigation selon la revendication 5 dans lequel le rayon de ladite zone (1010) est configuré pour que chaque zone comprenne le même nombre N de stations.

7. Procédé de contrôle de l'intégrité de stations (ST_EXT) d'observation de signaux de radio-navigation selon l'une des revendications 5 ou 6 dans lequel, au sein d'une zone (910,1010), on valide (602) uniquement l'intégrité de la station de référence.

8. Procédé de contrôle de l'intégrité de stations (ST_EXT) d'observation de signaux de radio-navigation selon l'une des revendications précédentes dans lequel le seuil d'exclusion est fixe ou fonction du nombre maximum de stations d'observation par zone à exclure.

9. Procédé de contrôle de l'intégrité de stations (ST_EXT) d'observation de signaux de radio-navigation selon l'une des revendications 1 à7 dans lequel le seuil d'exclusion est configuré de sorte à minimiser la probabilité de fausse alarme et la probabilité de non détection sur le nombre de stations d'observation exclues.

10. Procédé de contrôle de l'intégrité de stations (ST_EXT) d'observation de signaux de radio-navigation selon l'une des revendications précédentes dans lequel lesdites stations (ST_EXT) d'observation font partie d'un réseau de stations collaboratif.

11. Centre de contrôle et de traitement (CPF) pour système d'augmentation par satellite SBAS comportant des moyens (200) de contrôle de l'intégrité de stations (ST_EXT) d'observation de signaux de radio-navigation, lesdits moyens (200) étant adaptés à mettre en oeuvre le procédé selon l'une des revendications 1 à 10.

**12.** Système d'augmentation par satellite SBAS comportant une pluralité de stations d'observations (ST_EXT) dont l'intégrité n'est pas garantie et au moins un centre de contrôle et de traitement (CPF) selon la revendication 11.

**Patentansprüche**

**1.** Verfahren zum Kontrollieren der Integrität von Stationen (ST_EXT) zum Beobachten von Funknavigationssignalen in einem satellitengestützten Augmentationssystem SBAS, das wenigstens die folgenden Schritte beinhaltet:

- Definieren wenigstens einer geographischen Zone (701, 910, 1010), die mehrere Beobachtungsstationen (ST_EXT) umfasst;
- Berechnen, für jede Beobachtungsstation (ST_EXT) der Zone und für jede Sichtlinie zwischen der Station und einem Satelliten, einer Abweichung zwischen der theoretischen Pseudodistanz D und der gemessenen Pseudodistanz D',

wobei das Verfahren **dadurch gekennzeichnet ist, dass** es ferner die folgenden Schritte beinhaltet:

- Berechnen (601) des Mittels m der Abweichungen D-D' auf der Zone für alle in der Zone sichtbaren Satelliten;
- Bestätigen (602) der Integrität von wenigstens einer Beobachtungsstation der Zone, wenn die Abweichung zwischen der theoretischen Pseudodistanz D und der gemessenen Pseudodistanz D' für die Station und für wenigstens eine Sichtlinie zwischen der Station und einem Satelliten gleich oder kleiner als das Mittel ist, multipliziert mit einer vorbestimmten Ausschlussschwelle, und im gegenteiligen Fall Ausschließen dieser Beobachtungsstation.

**2.** Verfahren zum Kontrollieren der Integrität von Stationen (ST_EXT) zum Beobachten von Funknavigationssignalen nach Anspruch 1, wobei die Integrität der Beobachtungsstationen dieser Zone bestätigt (602) wird, wenn alle Abweichungen zwischen der theoretischen Pseudodistanz D und der gemessenen Pseudodistanz D' für alle Sichtlinien gleich oder kleiner als das Mittel sind, multipliziert mit einer vorbestimmten Ausschlussschwelle.

**3.** Verfahren zum Kontrollieren der Integrität von Stationen (ST_EXT) zum Beobachten von Funknavigationssignalen nach einem der vorherigen Ansprüche, wobei die theoretische Pseudodistanz D auf der Basis der Kenntnis der Positionen der Satelliten und der Beobachtungsstationen (ST_EXT) berechnet wird, und die gemessene Pseudodistanz D' durch die Beobachtungsstationen (ST_EXT) auf der Basis der empfangenen Funknavigationssignale berechnet wird.

**4.** Verfahren zum Kontrollieren der Integrität von Stationen (ST_EXT) zum Beobachten von Funknavigationssignalen nach einem der Ansprüche 1 bis 3, wobei die Zone (701) eine feste Größe hat.

**5.** Verfahren zum Kontrollieren der Integrität von Stationen (ST_EXT) zum Beobachten von Funknavigationssignalen nach einem der Ansprüche 1 bis 3, wobei die Zone (910) ein Kreis mit einem variablen Radius ist, der auf einer gegebenen Beobachtungsstation, Referenzstation genannt, zentriert ist.

**6.** Verfahren zum Kontrollieren der Integrität von Stationen (ST_EXT) zum Beobachten von Funknavigationssignalen nach Anspruch 5, wobei der Radius der Zone (1010) so konfiguriert ist, dass jede Zone dieselbe Anzahl N von Stationen umfasst.

**7.** Verfahren zum Kontrollieren der Integrität von Stationen (ST_EXT) zum Beobachten von Funknavigationssignalen nach Anspruch 5 oder 6, wobei innerhalb einer Zone (910, 1010) nur die Integrität der Referenzstation bestätigt (602) wird.

**8.** Verfahren zum Kontrollieren der Integrität von Stationen (ST_EXT) zum Beobachten von Funknavigationssignalen nach einem der vorherigen Ansprüche, wobei die Ausschlussschwelle fest oder eine Funktion der maximalen Anzahl von auszuschließenden Beobachtungsstationen pro Zone ist.

**9.** Verfahren zum Kontrollieren der Integrität von Stationen (ST_EXT) zum Beobachten von Funknavigationssignalen nach einem der Ansprüche 1 bis 7, wobei die Ausschlussschwelle so konfiguriert ist, dass sie die Wahrscheinlichkeit von Fehlalarm und die Wahrscheinlichkeit einer Nichterkennung an der Anzahl von ausgeschlossenen Beobachtungsstationen minimiert.

10. Verfahren zum Kontrollieren der Integrität von Stationen (ST_EXT) zum Beobachten von Funknavigationssignalen nach einem der vorherigen Ansprüche, wobei die Beobachtungsstationen (ST_EXT) zu einem kollaborativen Netzwerk von Stationen gehören.

11. Kontroll- und Verarbeitungszentrum (CPF) für ein satellitengestütztes Augmentationssystem SBAS, das Mittel (200) zum Kontrollieren der Integrität von Stationen (ST_EXT) zum Beobachten von Funknavigationssignalen umfasst, wobei die Mittel (200) zum Implementieren des Verfahrens nach einem der Ansprüche 1 bis 10 ausgelegt sind.

12. Satellitengestütztes Augmentationssystem SBAS, das mehrere Beobachtungsstationen (ST_EXT), deren Integrität nicht garantiert ist, und wenigstens eine Kontroll- und Verarbeitungszentrale (CPF) nach Anspruch 11 umfasst.

**Claims**

1. A method for monitoring the integrity of stations (ST_EXT) for observing radionavigation signals in a satellite-based augmentation system SBAS, comprising at least the following steps:

   - defining at least one geographical zone (701, 910, 1010) comprising a plurality of observation stations (ST_EXT);
   - computing, for each observation station (ST_EXT) of said zone and for each line of sight between said station and a satellite, the deviation between the theoretical pseudo-distance D and the measured pseudo-distance D',

   said method being **characterised in that** it further comprises the following steps:

   - computing (601) the mean m of said deviations D-D' on said zone for all of the satellites visible in said zone;
   - confirming (602) the integrity of at least one observation station of said zone if the deviation between the theoretical pseudo-distance D and the measured pseudo-distance D', for said station and for at least one line of sight between said station and a satellite, is less than or equal to said mean, multiplied with a predetermined exclusion threshold, and otherwise excluding said observation station.

2. The method for monitoring the integrity of stations (ST_EXT) for observing radionavigation signals according to claim 1, wherein the integrity of the observation stations of said zone is confirmed (602) if all of the deviations between the theoretical pseudo-distance D and the measured pseudo-distance D' for all of the lines of sight are less than or equal to said mean, multiplied with a predetermined exclusion threshold.

3. The method for monitoring the integrity of stations (ST_EXT) for observing radionavigation signals according to any one of the preceding claims, wherein the theoretical pseudo-distance D is computed on the basis of the knowledge of the positions of said satellites and said observation stations (ST_EXT) and the measured pseudo-distance D' is computed by said observation stations (ST_EXT) on the basis of the received radionavigation signals.

4. The method for monitoring the integrity of stations (ST_EXT) for observing radionavigation signals according to any one of claims 1 to 3, wherein the size of said zone (701) is fixed.

5. The method for monitoring the integrity of stations (ST_EXT) for observing radionavigation signals according to any one of claims 1 to 3, wherein said zone (910) is a circle with a variable radius centred on a given observation station, called reference station.

6. The method for monitoring the integrity of stations (ST_EXT) for observing radionavigation signals according to claim 5, wherein the radius of said zone (1010) is configured so that each zone comprises the same number N of stations.

7. The method for monitoring the integrity of stations (ST_EXT) for observing radionavigation signals according to claim 5 or 6, wherein only the integrity of said reference station is confirmed (602) within a zone (910, 1010).

8. The method for monitoring the integrity of stations (ST_EXT) for observing radionavigation signals according to any one of the preceding claims, wherein said exclusion threshold is fixed or is a function of the maximum number of observation stations per zone to be excluded.

9.  The method for monitoring the integrity of stations (ST_EXT) for observing radionavigation signals according to any one of claims 1 to 7, wherein said exclusion threshold is configured so as to minimise the probability of false alarm and the probability of non-detection on the number of excluded observation stations.

10. The method for monitoring the integrity of stations (ST_EXT) for observing radionavigation signals according to any one of the preceding claims, wherein said observation stations (ST_EXT) belong to a collaborative network of stations.

11. A monitoring and processing centre (CPF) for a satellite-based augmentation system SBAS, comprising means (200) for monitoring the integrity of stations (ST_EXT) for observing radionavigation signals, said means (200) being designed to implement the method according to any one of claims 1 to 10.

12. A satellite-based augmentation system SBAS comprising a plurality of observation stations (ST_EXT), the integrity of which is not guaranteed, and at least one monitoring and processing centre (CPF) according to claim 11.

FIG.1

FIG.2

FIG.3

FIG.4

FIG.5

EP 2 693 232 B1

FIG.6

EP 2 693 232 B1

FIG.7

FIG.8

FIG.11

FIG.9

FIG.10

**EP 2 693 232 B1**

## RÉFÉRENCES CITÉES DANS LA DESCRIPTION

**Documents brevets cités dans la description**

- US 7019688 B